# EUROPEAN PATENT APPLICATION

(11) **EP 4 454 463 A1**
(43) Date of publication of application: **30.10.2024**
(21) Application number: 23219552.9
(22) Date of filing: 21.12.2023
(51) Int. Cl.: A21C 5/00, A21C 11/10

(54) **CHRABELI COOKIE KNIFE**

(30) Priority: 24.04.2023 WO PCT/IB2023/054180
(71) Applicant: Borer, Philipp, Calgary Alberta T3M 1C3 (CA)
(72) Inventor: Borer, Philipp, Calgary Alberta T3M 1C3 (CA)
(74) Representative: Forresters IP LLP

(57) **Abstract**

A cutting implement for cutting a dough rope several times simultaneously in a single cutting action of the implement is provided. The cutting implement has an elongated support, a first cutting blade extending from a side of the elongated support, and a plurality of second cutting blades spaced lengthwise along the elongated support and extending from the side. The first cutting blade has first a cutting blade length and each of the plurality of second cutting blades have a second cutting blade length. The first cutting blade length is greater than the second cutting blade length so that the first cutting blade cuts completely across a dough rope, and the second cutting blades only cut partially across the dough rope when the rope is cut by the implement. The resulting cut provides a dough rope segment having a series of cross-cuts that are spaced along the length of the segment.

## Description

### FIELD OF THE INVENTION

The invention relates to improvements in cutting implements and may relate to a cutting implement design primarily for use in cutting chrabeli-shaped cookies.

### BACKGROUND OF THE INVENTION

To make chrabeli cookies, also known as swiss anise cookies, dough is rolled into a rope. Then, using a conventional knife, the rope is cut into individual rope segments. These rope segments are then further cut to have three spaced cuts along its length and on one side, being careful not to cut all the way through or across the width of the rope. The rope segments are then shaped into a crescent with the cuts on the outside of the crescent.

Using a conventional knife, this process is quite laborious requiring a user to make four separate cuts for each cookie. Accordingly, there is a need and desire to have a cutting implement for cutting chrabeli cookies in a single cutting action.

### SUMMARY OF THE INVENTION

Versions of the present technology provide for a cutting implement that cuts charbeli-shaped cookies from a dough rope in a single cutting action.

In a version, the cutting implement has an elongated support with a length and a side. A first cutting blade may extend from the side of the elongated support. A plurality of second cutting blades may be spaced lengthwise along the elongated support and extend from the first side. The first cutting blade may have a first cutting blade length and each of the plurality of second cutting blades may have a second cutting blade length. The first cutting blade length may be greater than the second cutting blade length so that the first cutting blade cuts completely across a dough rope, and the second cutting blades only cut partially across the dough rope.

In some versions, one or more of the plurality of second cutting blades can be angled relative to the side of elongated support. The second cutting blades may be angled relative to the side of the elongated support in a direction away from the first cutting blade. In some versions, the cutting implement may have a dough alignment member extending from an outward side of the first cutting blade. The dough alignment member may be U-shaped. In some versions, each of the plurality of second cutting blades may be equally spaced along the inward side of the elongated support. In some versions, the elongated support, the first cutting blade, and each of the plurality of second cutting blades can be integrally formed from a single piece of material. The plastic material could be polyoxymethylene (POM), for example.

An aspect provides a cutting implement for cutting a segment of dough from an elongated length of dough, the cutting implement comprising: an elongated support having length and a first side, a first cutting blade extending from the first side of the elongated support; a plurality of second cutting blades spaced lengthwise along the elongated support extending from the first side; wherein the first cutting blade has first a cutting blade length; wherein each of the plurality of second cutting blades have a second cutting blade length; and wherein the first cutting blade length is greater than the second cutting blade length.

One or more of the plurality of second cutting blades may be angled relative to the first side of elongated support.

Each of the plurality of second cutting blades may be angled relative to the first side of the elongated support in a direction away from the first cutting blade.

The first cutting blade may extend perpendicularly from the first side of the elongated support; and each of the plurality of second cutting blades may be angled relative to the first side of the elongated support in a direction away from the first cutting blade.

The cutting implement may further comprise: a dough alignment member extending from an outward side of the first cutting blade, the dough alignment member defining a dough receiving space.

The dough alignment member may be U-shaped.

The dough receiving space may be configured to align a length of an elongated piece of dough relative to the first cutting blade and the plurality of second cutting blades, such that the plurality of second cutting blades do not cut completely across a transverse width of the elongated piece of dough and the first cutting blade cuts completely across the transverse width of the elongated piece of dough when the cutting implement is pressed downwardly into the elongated piece of dough.

Each of the plurality of second cutting blades may be equally spaced along the first side of the elongated support.

The elongated support, the first cutting blade, and each of the plurality of second cutting blades may be integrally formed from a single piece of material.

The elongated support, the first cutting blade, and each of the plurality of second cutting blades may be integrally formed from a single piece of plastic material.

The plastic material may be polyoxymethylene (POM).

The first cutting blade may have a bottom knife edge, and/or wherein each of the plurality of second cutting blades may have a bottom knife edge and/or wherein each of the plurality of second cutting blades may have a forward knife edge.

Another aspect provides a method of cutting a segment of dough, the method including: providing a cutting implement (10) as above; providing an elongated length of dough; and pressing the cutting implement into a part of the elongated length of dough to cut the segment of dough with a plurality of cuts along the segment corresponding to the second cutting blades.

The method may further include removing the segment of dough from the cutting implement and shaping the segment of dough into a crescent with the plurality of cuts along an outside of the crescent.

Another aspect provides a cutting implement as above in combination with an elongated length of dough.

Numerous additional objects, features and advantages of the present invention will be readily apparent to those of ordinary skill in the art upon a reading of the following detailed description of presently preferred, but nonetheless illustrative, versions of the present technology when taken in conjunction with the accompanying drawings. The technology is capable of other versions and of being practiced and carried out in various ways. Also, it is to be understood that the phraseology and terminology employed herein are for the purpose of descriptions and should not be regarded as limiting.

As such, those skilled in the art will appreciate that the conception, upon which this disclosure is based, may readily be utilized as a basis for the designing of other structures, methods, and systems for carrying out the several purposes of the present technology. It is important, therefore, that the claims be regarded as including such equivalent constructions.

For a better understanding of the invention, its operating advantages and the specific objects attained by its uses, reference should be had to the accompanying drawings and descriptive matter in which there are illustrated versions of the technology.

### BRIEF DESCRIPTION OF THE DRAWINGS

The following drawings illustrate by way of example and are included to provide a further understanding of the invention for the purpose of illustrative discussion of the versions of the technology. No attempt is made to show structural details of the versions in more detail than is necessary for a fundamental understanding of the technology, the description taken with the drawings making apparent to those skilled in the art how the several forms of the technology may be embodied in practice. Identical reference numerals do not necessarily indicate an identical structure. Rather, the same reference numeral may be used to indicate a similar feature or a feature with similar functionality. In the drawings:
Figure 1 is a first perspective view of a cutting implement shown in accordance with a version of the technology;
Figure 2 is a second perspective view of a cutting implement shown in accordance with some versions of the technology;
Figure 3 is a top view of a cutting implement shown in accordance with some versions of the technology;
Figure 4 is a bottom view of a cutting implement shown in accordance with some versions of the technology;
Figure 5 is a first side view of a cutting implement shown in accordance with some versions of the technology;
Figure 6 is a second side view of a cutting implement shown in accordance with some versions of the technology;
Figure 7 is a back view of a cutting implement shown in accordance with some versions of the technology;
Figure 8 is a front view of a cutting implement shown in accordance with some versions of the technology;
Figure 9 is a top view of a cutting implement shown in accordance with some versions of the techology, and in use with a rope of dough being sized;
Figure 10 is a top view of a cutting implement shown in accordance with some versions of the technology, and positioned above a rope of dough that is to be cut by the implement;
Figure 11 is a front view of a cutting implement shown in accordance with some versions of the technology, and shown cut through the rope of dough, forming a segment cut from the end of the rope of dough with the segment having desired cross cuts; and
Figure 12 is a top view of a segment of dough cut with the implement and having desired cross cuts for forming into a desired cookie shape.

### DETAILED DESCRIPTION

The following detailed description of versions of the technology references the accompanying drawings. The versions are intended to describe aspects of the technology in sufficient detail to enable those skilled in the art to practice the technology. Other versions can be utilized, and changes can be made without departing from the scope of the disclosure.

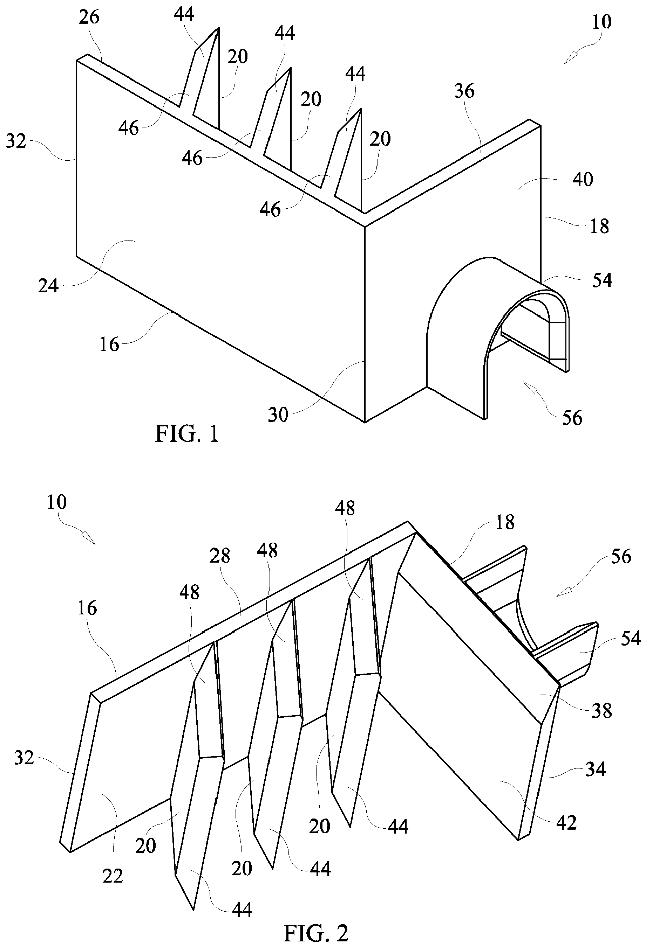

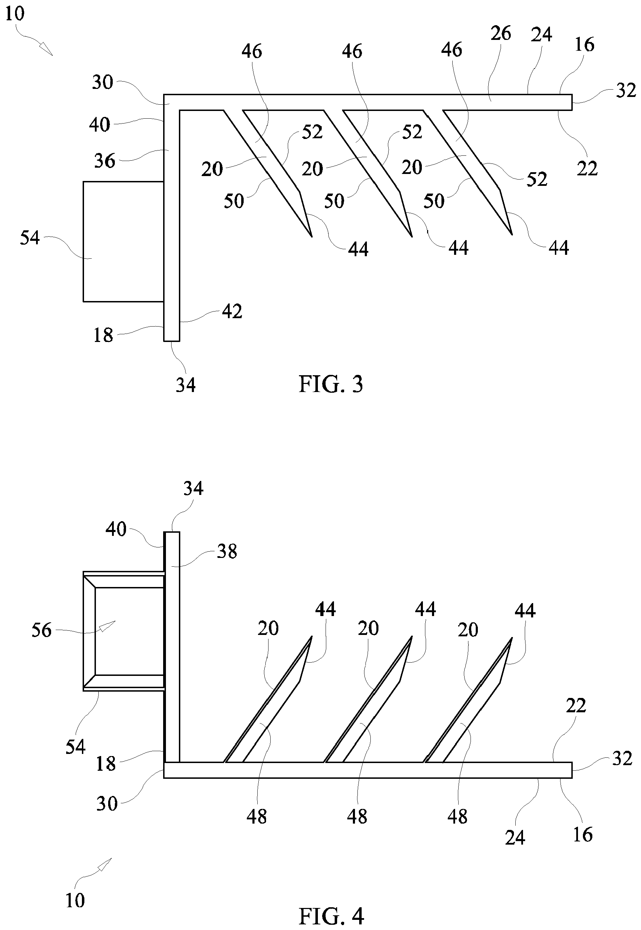

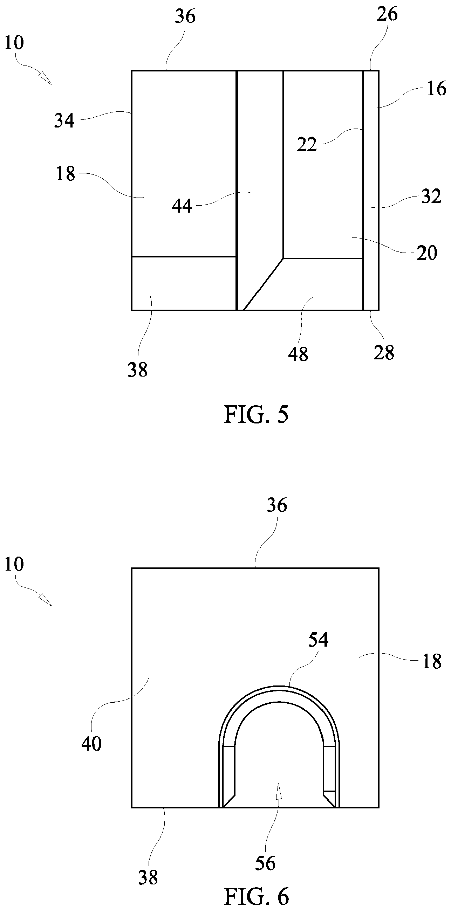

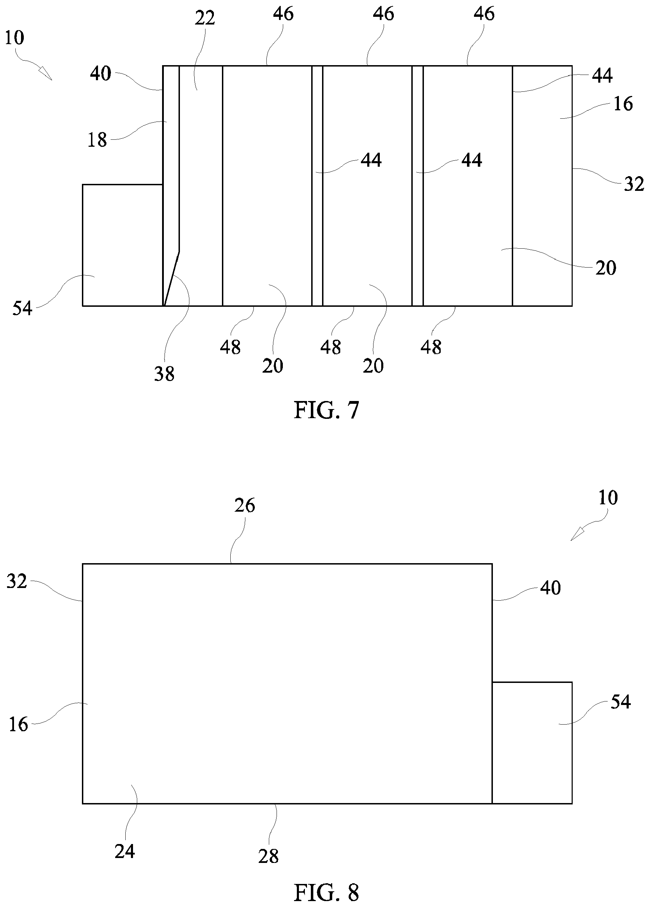

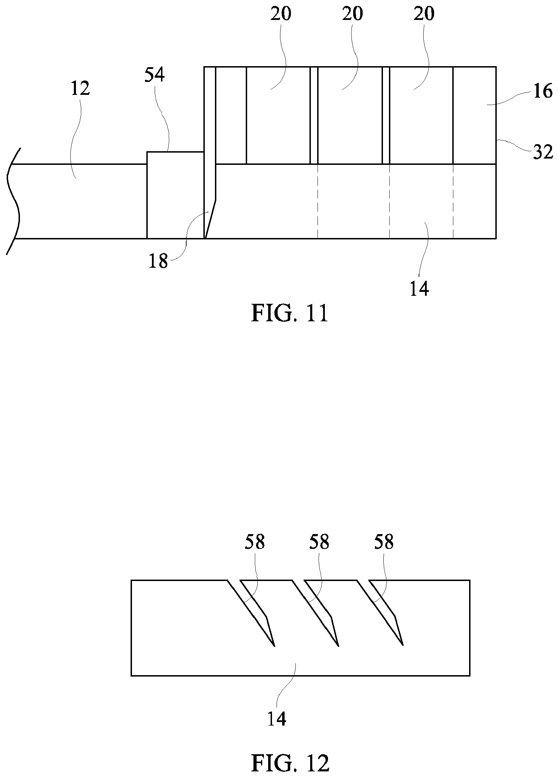

In FIGS. 1-11 of the drawings, there is illustrated a cutting implement 10 that is constructed in accordance with a version of the technology. Cutting implement 10 is useful to cut chrabeli cookies from a rope of dough 12. Particularly, the cutting implement 10 may be configured to cut a segment of dough 14 from a rope of dough 12 in a single cutting action that simultaneously cuts the segment from the rope and partially cuts the dough across its width in multiple spaced locations, representatively shown as three spaced crosswise cuts. For the purpose of herein, a rope of dough may be considered to be an elongated piece of dough having a length greater than its width.

In some versions, cutting implement 10 has a support 16 (which may be an elongated support 16 and/or which may be a rigid support 16), a first cutting blade 18, and a plurality of second cutting blades 20. As representatively shown, support 16 may take a planar wall shape having a broad first side 22, an opposite broad second side 24, top and bottom edges 26 and 28, and opposite side edges 30 and 32. Support 16 may also have a length extending between opposite side edges 30 and 32. The support length can be dimensioned to function as a measuring guide to cut a segment 14 at a desired length.

The first cutting blade 18 may be rigid and may extend from the support first side 22 and may terminate at a free end at a spaced distance from the support first side. The first cutting blade 18 may have a forward edge 3 4 at the free end, top and bottom edges 36 and 38, opposite outward and inward sides 40 and 42, a blade length that extends from the support first side 22 to the forward edge, and a blade height that extends between the top and bottom edges thereof. In some versions, the first cutting blade 18 may extend perpendicularly from the support first side 22 to provide a straight cut across the width of the dough rope 12. The length of the first cutting blade 18 may be of a length sufficient to completely cut across the width of the dough rope 12 to sever the dough segment 14 therefrom. In some versions, the first cutting blade bottom edge 38 can be a knife edge.

The second cutting blades 20 may be spaced from the first cutting blade and each other lengthwise along the support 16 and may extend outward from the support first side 22. Each of the second cutting blades 20 may be rigid and may terminate at a free end at a spaced distance from the support first side 22. Further, each second cutting blade 20 may have a forward edge 44 at the free end, top and bottom edges 46 and 48, opposite outward and inward sides 50 and 52, a blade length that extends from the support first side 22 to the forward edge, and a blade height that extends between the top and bottom edges thereof.

In some versions, the second cutting blades 20 may be angled relative to the support 16 and may be angled in a direction away from the first cutting blade 18. The purpose of angling the second cutting blades 20 may be to make a diagonal cut into the dough rope 12 to provide a desired cookie shape.

The length of each cutting blade 20 may be such the blades do not cut completely across the width of the dough rope 12 so that the cutting blades only make a partial cut through the same side of the dough rope. Further, edge 44 can be a knife edge, and bottom edge 48 can be a knife edge.

In some versions, the height of the first cutting blade 18 may be larger than the height or the width of the dough rope 12 to prevent the dough from reconnecting after cutting. Similarly, in some versions, the heights of the second cutting blades 20 may be larger than the height or width of the dough rope 12 to prevent the dough from reconnecting after cutting.

In some versions, cutting implement 10 may have a sizing feature to help the user size the width of the dough rope 12 to ensure the width is in range so that the dough rope is completely cut across its width by the first cutting blade 18 and so that the second cutting blades 20 do not completely cut across the width. In the depicted and some other versions, sizing feature 54 may be disposed on the outward side 40 of the first cutting blade 18. Sizing feature 54 may define a space 56 to receive an end of a dough rope to size the width of the rope. Space 56 may function like a size gauge and is dimensioned to measure the width or height of the dough rope 12 in relation to the length of the first cutting blade 18 and the lengths of the second cutting blades 20. If the end of the dough rope fills space 56 when positioned in the space, the width of the rope is in range to be properly cut. In the depicted and some other versions, the sizing feature 54 may be an inverted U-shaped wall open at its front and at the bottom and defines space 56.

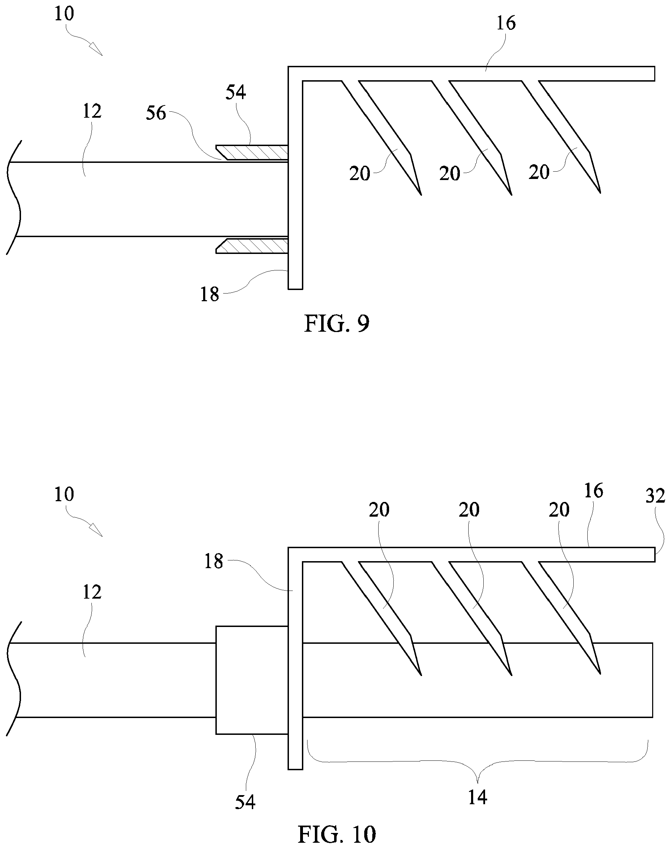

As shown in FIG. 9, in some versions, in use, implement 10 may be positioned relative to the end of the dough rope 12 to position the sizing feature 54 over the end of the rope and then pressed downward causing the end to enter space 56, and then the implement can be pulled upward from the rope. If a slight indent or impression is made to the sides of the end of the dough rope by the sizing feature 54, this indicates the width of the rope is within range to be properly cut by the implement 10. If, however, no indentation or impression is made to the sides of the dough rope, the width is too small, and if the sizing element cuts through the dough rope, the width is too large. In some versions, sizing feature 54 can also be used to help align the dough rope 12 along the support 16 for cutting.

In some versions, the support 16, the first cutting blade 18, and the second cutting blades 20 can be integrally formed as a single piece. The integrally formed single piece can be formed of plastic material, for example. A plastic material may be desirable so that the cutting implement is not sharp enough to damage a countertop, for example, and/or to cause injury to a user. In some versions, the plastic material may be polyoxymethylene, which is a durable plastic having non-stick properties.

In use, a dough rope 12 having a properly sized width, which may be sized by sizing feature 54, is positioned lengthwise on a cutting surface. Implement 10, is positioned above the dough rope 12 with the end of the rope generally aligned with end 32 of support 16 and with the side of the rope running along the support and just inside the support side 22, as best seen in FIG. 10. Pressing implement 10 downwardly into the dough rope 12 causes blade 18 and blades 20 to simultaneously cut the rope at respective, spaced locations. Blade 18 completely cuts through the dough rope 12, thereby cutting segment 14 therefrom, and each blade 20 makes a partial cut through the rope from the same side. Once cut, implement 10 can be removed from segment 14 and the segment can further be shaped into a crescent with the cuts 58 made by blades 20 on the outside of the crescent, thereby forming a chrabeli-shaped cookie ready for baking. Accordingly, implement 10 can be used to cut chrabeli-shaped cookies in a single cutting action. And the resulting cookies will have a more uniform shape over being cut several times by a conventional knife.

In some versions, the cutting implement (10) may be referred to as a cookie cutter.

It will be appreciated by persons skilled in the art that the present invention is not limited to what has been particularly shown and described hereinabove. A variety of modifications and variations are possible in light of the above teachings without departing from the scope of the disclosure.

When used in this specification and claims, the terms "comprises" and "comprising" and variations thereof mean that the specified features, steps or integers are included. The terms are not to be interpreted to exclude the presence of other features, steps or components.

The invention may also broadly consist in the parts, elements, steps, examples and/or features referred to or indicated in the specification individually or collectively in any and all combinations of two or more said parts, elements, steps, examples and/or features. In particular, one or more features in any of the embodiments described herein may be combined with one or more features from any other embodiment(s) described herein.

Protection may be sought for any features disclosed in any one or more published documents referenced herein in combination with the present disclosure.

Although certain example embodiments of the invention have been described, the scope of the appended claims is not intended to be limited solely to these embodiments. The claims are to be construed literally, purposively, and/or to encompass equivalents.

### Clauses:

1. A cutting implement for cutting a segment of dough from an elongated length of dough, the cutting implement comprising:
   an elongated support having length and a side,
   a first cutting blade extending from the side of the elongated support;
   a plurality of second cutting blades spaced lengthwise along the elongated support extending from the first side;
   wherein the first cutting blade has first a cutting blade length;
   wherein each of the plurality of second cutting blades have a second cutting blade length; and
   wherein the first cutting blade length is greater than the second cutting blade length.
2. The cutting implement of clause 1, wherein one or more of the plurality of second cutting blades are angled relative to the side of elongated support.
3. The cutting implement of clause 1 or 2, wherein each of the plurality of second cutting blades are angled relative to the side of the elongated support in a direction away from the first cutting blade.
4. The cutting implement of any preceding clause, further comprising:
   a dough alignment member extending from an outward side of the first cutting blade, the dough alignment member defining a dough receiving space.
5. The cutting implement of clause 4, wherein the dough alignment member is U-shaped.
6. The cutting implement of any preceding clause, wherein each of the plurality of second cutting blades are equally spaced along the inward side of the elongated support.
7. The cutting implement of any preceding clause, wherein the elongated support, the first cutting blade, and each of the plurality of second cutting blades are integrally formed from a single piece of material.
8. The cutting implement of any preceding clause, wherein the elongated support, the first cutting blade, and each of the plurality of second cutting blades are integrally formed from a single piece of plastic material.
9. The cutting implement of clause 8, wherein the plastic material is polyoxymethylene (POM).
10. The cutting implement of any preceding clause, wherein the first cutting blade has a bottom knife edge.
11. The cutting implement of any preceding clause, wherein each of the plurality of second cutting blades has a bottom knife edge.
12. The cutting implement of any preceding clause, wherein each of the plurality of second cutting blades has a forward knife edge.
13. A cutting implement for cutting a segment of dough from an elongated length of dough, the cutting implement comprising:
   an elongated support having length and a side,
   a first cutting blade extending perpendicularly from the side of the elongated support;
   a plurality of second cutting blades spaced lengthwise along the elongated support extending from the first side;
   each of the plurality of second cutting blades being angled relative to the side of the elongated support in a direction away from the first cutting blade;
   wherein the first cutting blade has first a cutting blade length;
   wherein each of the plurality of second cutting blades have a second cutting blade length; and
   wherein the first cutting blade length is greater than the second cutting blade length.
14. The cutting implement of clause 13 further comprising:
   a dough alignment member extending from an outward side of the first cutting blade, the dough alignment member defining a dough receiving space that is configured to align a length of an elongated piece of dough relative to the first cutting blade and the plurality of second cutting blades, such that the plurality of second cutting blades do not cut completely across a transverse width of the elongated piece of dough and the first cutting blade cuts completely across the transverse width of the elongated piece of dough when the cutting implement is pressed downwardly into the elongated piece of dough.
15. The cutting implement of clause 14, wherein the dough alignment member is U-shaped.
16. The cutting implement of any of clauses 13-15, wherein the elongated support, the first cutting blade, and each of the plurality of second cutting blades are integrally formed from a single piece of material.
17. The cutting implement of any of clauses 13-16, wherein the elongated support, the first cutting blade, and each of the plurality of second cutting blades are integrally formed from a single piece of plastic material.
18. The cutting implement of clause 17, wherein the plastic material is polyoxymethylene (POM).
19. The cutting implement of any of clauses 13-18, wherein the first cutting blade has a bottom knife edge.
20. The cutting implement of any of clauses 13-19, wherein each of the plurality of second cutting blades has a bottom knife edge.

## Claims

1. A cutting implement (10) for cutting a segment of dough (14) from an elongated length of dough (12), the cutting implement (10) comprising:
an elongated support (16) having length and a first side (22),
a first cutting blade (18) extending from the first side (22) of the elongated support (16);
a plurality of second cutting blades (20) spaced lengthwise along the elongated support (16) extending from the first side (22);
wherein the first cutting blade (18) has first a cutting blade length;
wherein each of the plurality of second cutting blades (20) have a second cutting blade length; and
wherein the first cutting blade length is greater than the second cutting blade length.

2. The cutting implement (10) of claim 1, wherein one or more of the plurality of second cutting blades (20) are angled relative to the first side (22) of elongated support (16).

3. The cutting implement (10) of claim 1 or 2, wherein each of the plurality of second cutting blades (20) are angled relative to the first side (22) of the elongated support (16) in a direction away from the first cutting blade (18).

4. The cutting implement (10) of any of claims 1, wherein:
the first cutting blade (18) extends perpendicularly from the first side of the elongated support (16); and
each of the plurality of second cutting blades is angled relative to the first side of the elongated support (16) in a direction away from the first cutting blade (18).

5. The cutting implement (10) of any preceding claim, further comprising:
a dough alignment member (54) extending from an outward side (40) of the first cutting blade (18), the dough alignment member (54) defining a dough receiving space (56).

6. The cutting implement (10) of claim 5, wherein the dough alignment member (54) is U-shaped.

7. The cutting implement of claim 5 or 6, wherein:
the dough receiving space (56) is configured to align a length of an elongated piece of dough (12) relative to the first cutting blade (18) and the plurality of second cutting blades (20), such that the plurality of second cutting blades (20) do not cut completely across a transverse width of the elongated piece of dough (12) and the first cutting blade (18) cuts completely across the transverse width of the elongated piece of dough (12) when the cutting implement (10) is pressed downwardly into the elongated piece of dough (12).

8. The cutting implement (10) of any preceding claim, wherein each of the plurality of second cutting blades (20) are equally spaced along the first side (22) of the elongated support (16).

9. The cutting implement (10) of any preceding claim, wherein the elongated support (16), the first cutting blade (18), and each of the plurality of second cutting blades (20) are integrally formed from a single piece of material.

10. The cutting implement (10) of any preceding claim, wherein the elongated support (16), the first cutting blade (18), and each of the plurality of second cutting blades (20) are integrally formed from a single piece of plastic material.

11. The cutting implement (10) of claim 10, wherein the plastic material is polyoxymethylene (POM).

12. The cutting implement (10) of any preceding claim, wherein the first cutting blade (18) has a bottom knife edge (38), and/or wherein each of the plurality of second cutting blades (20) has a bottom knife edge (48) and/or wherein each of the plurality of second cutting blades has a forward knife edge (44).

13. A method of cutting a segment of dough (14), the method including:
providing a cutting implement (10) according to any preceding claim;
providing an elongated length of dough (12); and
pressing the cutting implement (10) into a part of the elongated length of dough (12) to cut the segment of dough (14) with a plurality of cuts along the segment corresponding to the second cutting blades (20).

14. A method according to claim 13, further including removing the segment of dough (14) from the cutting implement (10) and shaping the segment of dough (14) into a crescent with the plurality of cuts along an outside of the crescent.

15. A cutting implement (10) according to any of claims 1 to 12 in combination with an elongated length of dough (12).
